Europäisches Patentamt

European Patent Office

Office européen des brevets

(11) Publication number: **0 411 547 A1**

## EUROPEAN PATENT APPLICATION

(21) Application number: **90114626.6**

(22) Date of filing: **30.07.90**

(51) Int. Cl.5: **C04B 35/50**, C04B 35/42, C04B 35/34, H01M 8/10

(30) Priority: **31.07.89 JP 196785/89**
**30.03.90 JP 81257/90**
**30.03.90 JP 81258/90**
**30.03.90 JP 81259/90**
**30.03.90 JP 81260/90**
**30.03.90 JP 81261/91**

(43) Date of publication of application:
**06.02.91 Bulletin 91/06**

(84) Designated Contracting States:
**BE DE FR GB**

(71) Applicant: **Tonen Corporation**
**1-1 Hitotsubashi, 1-Chome Chiyoda-Ku**
**Tokyo 100(JP)**

Applicant: **PETROLEUM ENERGY CENTER**
**2-3-22, Azabudai**
**Minato-ku, Tokyo(JP)**

(72) Inventor: **Seto, Hiroshi, Tonen Corp.**
**Corporate Research**
**Development Lab., 3-1 Nishitsurugaoka**
**1-chome**
**Ohimachi, Iruma-gun, Saitama(JP)**
Inventor: **Someya, Yoshiyuki, Tonen Corp.**
**Corporate Research**
**Development Lab., 3-1 Nishitsurugaoka**
**1-chome**
**Ohimachi, Iruma-gun, Saitama(JP)**

Inventor: **Yoshida, Toshihiko, Tonen Corp.**
**Corporate Research**
**Development Lab., 3-1 Nishitsurugaoka**
**1-chome**
**Ohimachi, Iruma-gun, Saitama(JP)**
Inventor: **Sakurada, Satoshi, Tonen Corp.**
**Corporate Research**
**Development Lab., 3-1 Nishitsurugaoka**
**1-chome**
**Ohimachi, Iruma-gun, Saitama(JP)**
Inventor: **Mukaizawa, Isao, Tonen Corp.**
**Corporate Research**
**Development Lab., 3-1 Nishitsurugaoka**
**1-chome**
**Ohimachi, Iruma-gun, Saitama(JP)**
Inventor: **Iwasaki, Hiroyuki, Tonen Corp.**
**Corporate Research**
**Development Lab., 3-1 Nishitsurugaoka**
**1-chome**
**Ohimachi, Iruma-gun, Saitama(JP)**
Inventor: **Tsunoda, Atsushi, Tonen Corp.**
**Corporate Research**
**Development Lab., 3-1 Nishitsurugaoka**
**1-chome**
**Ohimachi, Iruma-gun, Saitama(JP)**

(74) Representative: **Klunker . Schmitt-Nilson .**
**Hirsch**
**Winzererstrasse 106**
**D-8000 München 40(DE)**

(54) Lanthanum chromite-based complex oxides and uses thereof.

(57) A novel lanthanum chromite-based complex oxide having an electrical conductivity at a high temperature and an ability to be densely sintered at a normal pressure is provided, and is represented by the general formula $La_{1-x}M_xCr_{1-y}M'_yO_3$ wherein M stands for at least one alkaline earth metal other than magnesium, M' stands for at least one metal selected from the group consisting of Co, Fe, Ni, Zn, Cu, Mn, Al, V, Ir, Mo, W, Pd and Y, $0 < x \leq 0.5$, and $0 < y \leq 0.5$; the complex oxide having a perovskite structure.

EP 0 411 547 A1

## *Fig. 1*

## LANTHANUM CHROMITE-BASED COMPLEX OXIDES AND USES THEREOF

BACKGROUND OF THE INVENTION

1. Field of the Invention

The present invention relates to novel lanthanum chromite-based complex oxides and the uses thereof as a high temperature electrically conductive material, particularly as a separator of a solid oxide fuel cell (SOFC). The novel lanthanum chromite-based complex oxides are highly electrically conductive and dense and, therefore, can be used as a high temperature electrically conductive material in a solid oxide fuel cell, an MHD (magnetohydrodynamic) power generator, and the like.

2. Description of the Related Art

Lunthanun chromite ($LaCrO_3$) is an oxide ceramics that is an electrically conductive material capable of being used in a high temperature oxidation and reduction atmosphere, due to a conductivity at a high temperature and an excellent oxidation and reduction resistance thereof.

The conductivity of lanthanum chromite can be improved by adding an alkaline earth metal such as magnesium, calcium, strontium and barium to lanthanum chromite as an additively, which additive acts as a dopant to thereby improve the conductivity. Lanthanum chromite has a perovskite structure $ABO_3$, wherein A and B denote a metal element and O denotes oxygen. The added calucium, strontium or barium is soluted by substitution in a lanthanum position in the lanthanum chromite lattice, and the added magnesium is soluted by substitution in a chromium position in the lanthanum chromite lattice.

The minor dopant-added lanthanum chromite has a satisfactorily high electrical conductivity, but it is difficult to dense by sinter same in air at a normal pressure, resulting in a formation of pores, and accordingly, an inability to prevent a penetration of a gas therethrough. Therefore, when lanthanum chromite is intended for use as, for example, a separator of a solid oxide fuel cell, this is not satisfactory because it is impossible for the lanthanum chromite to completely separate a fuel gas and air.

The reasons why it is difficult to dense by sinter the lanthanum chromite are that a vapor pressure of chromium oxide is high at a firing temperature, and therefore, a chromium oxide vapor formed by a decomposition of lanthanum chromite prevents a movement of pores in the grain boundary of the sintered body, and accordingly, the pores remain as fine voids in the sintered body ("Kogyo Zairyo" separate volume, November 1987, page 18), and that a volume diffusion rate of ions in the lanthanum chromite is so slow that a movement of the boundaries of the starting materials becomes difficult.

Therefore, the object of the present invention is to solve the above problems and to provide a lanthanum chromite-based material which is densely sintered in air at a normal pressure and which has an improved electrical conductivity.

SUMMARY OF THE INVENTION

The above and other objects are attained by a lanthanum chromite-based complex oxide represented by the general formula $La_{1-x}M_xCR_{1-y}M'_yO_3$ wherein M stands for at least one alkaline earth metal other than magnesium, M' stands for at least one metal selected from the group consisting of Co, Fe, Ni, Zn, Cu, Mn, Al, V, Ir, Mo, W, Pd and Y, $0 < x \leq 0.5$, and $0 < y \leq 0.5$; the complex oxide having a perovskite structure.

The above novel lanthanum chromite-based complex oxide has a perovskite structure represented by the above formula, and is ideally thought to have a perovskite structure ($ABO_3$) comprising La at the A site and Cr at the B site thereof, in which La is partially replaced by at least one alkaline earth metal and Cr is partially replaced by the above at least one metal.

The electrical conductivity of the oxide is improved by replacing a part of La by an alkaline earth metal. Note, magnesium is not used in the present invention because it replaces the Cr of the B site instead of the La of the A site. The amount of alkaline earth metal replacing La is up to 0.5 molar fraction, preferably 0.2-0.4 molar fraction. Within this range, the electrical conductivity is improved with an increase of the replacing amount of the alkaline earth metal, but if the replacing amount of the alkaline earth metal is increased to more than this range, the alkaline earth metal cannot further replace La and a complex oxide having a structure other than the perovskite structure, for example, $CaCrO_4$, $SrCrO_4$, etc., may be formed, and thus the characteristics of the lanthanum chromite-based complex oxide are extremely adversely affected.

The metal $M'$ lowers a vapor pressure of chromium oxide, and thus prevents a vaporization thereof by partially replacing the Cr of the B site of the perovskite structure, whereby a denser sintered body obtained. Such a metal is preferably one that changes the ionization valence of chromium ion by an addition thereof, and thus lowers the vapor pressure of the chromium oxide, or one that enhances a volume duffusion or a grain boundary diffusion critical to the densification during sintering. Metals meeting these requirements include Co, Fe, Ni, Zn, Cu, Mn, Al, V, Ir, Mo, W, Pd and Y. These metals also have an effect of improving the electrical conductivity of the complex oxide. The total amount of the metal $M'$ replacing Cr is up to 0.5 molar fraction, preferably 0.05-0.3 molar fraction. If the amount of the metal $M'$ is increased, a solid solution thereof is difficult to obtain and other oxides, for example, $LaCoO_3$ (lanthanum cobaltite), $LaFeO_3$, $LaNiO_3$, ZnO, CuO, $LaMnO_3$, $Al_2O_3$, $V_2O_3$, $Ir_2O_3$, $MoO_2$, $WO_3$, PdO, $Y_2O_3$, etc., may be formed. $LaCoO_3$, $LaFeO_3$, $LaNiO_3$, CuO, $LaMnO_3$, $In_2O_3$, $Y_2O_3$, etc., have an adverse affect on the characteristics of the lanthanum chromite, since they provide an electrical conductivity by electrons as well as by oxygen ions and are not stable in a reducing atmosphere. ZnO, $Al_2O_3$, $V_2O_3$, $WO_3$, are PdO $O_2Y_3$ and are not desired as an electrical conductive material since they have a low electrical conductivity in an oxidizing atmosphere. Therefore, the amount of the metal M, should be such that the above oxides are not formed, or only a minor amount of the above oxides is formed.

The production of the lanthanum chromite-based complex oxide of the present invention may be carried out by a conventional manner. Namely, the starting materials for lanthanum, alkaline earth metal, chromium, and metal $M'$ are mixed at a predetermined ratio, and calcined at a predetermined temperature, generally 1000-1600°C, preferably 1000-1200°C. The time for the calcination is generally 1 hour to several hours, preferably 1-10 hours, and the atmosphere is an oxygen-containing atmosphere, such as air The pressure may be normal.

The forming and firing of the calcined powders may be also carried cut in a conventional manner. The firing temperature is generally higher than 1300°C, preferably 1500-1600°C, the firing time depends on the shape of a body to be fired, but is generally 1-10 hours, preferably 1-2 hours, and the atmosphere is an oxygen-containing atmosphere. The lanthanum chromite-based complex oxide of the present invention is characterized by a capability of being fired at the normal pressure, but does not exclude a firing under an increasing pressure.

The thus-obtained sintered minor amount of element-added lanthanum chromite has a relative density of not less than 95 % of the theoretical density when fired at the normal pressure, and has an electrical conductivity of typically more than two times that of the conventional lanthanum chromite.

Furthermore, this sintered body has an excellent resistance to oxidation and reduction and, therefore, is useful as a high temperature electrical conductive material requiring both a corrosion resistance and an electrical conductivity. Particularly, this sintered body is useful for a separator (interconnector) material of a solid oxide fuel cell, since it has an electrical conductivity and a corrosion resistance, as well as a dense structure.

The lanthanum chromite-based complex oxide of the present invention is useful for a high temperature electrically conductive material, particularly a separator of solid electrolyte type fuel cells.

Accordingly, the present invention also provides, fro example, a planar type assembly of solid oxide fuel cells, comprising solid electrolytes, cathodes disposed on one surface of the solid electrolytes, and anodes disposed on the other surface of the solid electrolytes, the solid electrolytes being stacked such that the cathodes and anodes are arranged alternately, and separators are inserted between adjacent solid electrolytes and in contact with the cathode and anode of the adjacent solid electrolytes, the separator thereby electrically connecting the cathode and anode, the separator having first and second grooves forming a first path for an oxygen-containing gas on a side of the cathode and a second path for a fuel on a side of the anode, the first and second paths being separated, wherein the separator essentially consists of a lanthanum chromite-based complex oxide represented by the general formula $La_{1-x}M_xCr_{1-y}M'_yO_3$ wherein M stands for at least one alkaline earth metal other than magnesium, $M'$ stands for at least one metal selected from the group consisting of Co, Fe, Ni, Zn, Cu, Mn, Al, V, Ir, Mo, W, Pd and Y, $0 < x \leq 0.5$, and $0 < y \leq 0.5$; the complex oxide having a perovskite structure.

BRIEF DESCRIPTION OF THE DRAWINGS

Figure 1 is a perspective view of an assembly of planar-type solid oxide fuel cells, and
Figs. 2-6 are X-ray diffraction patterns of the lanthanum chromite-based complex oxides made in Examples 2-6.

DESCRIPTION OF THE PREFERRED EMBODIMENTS

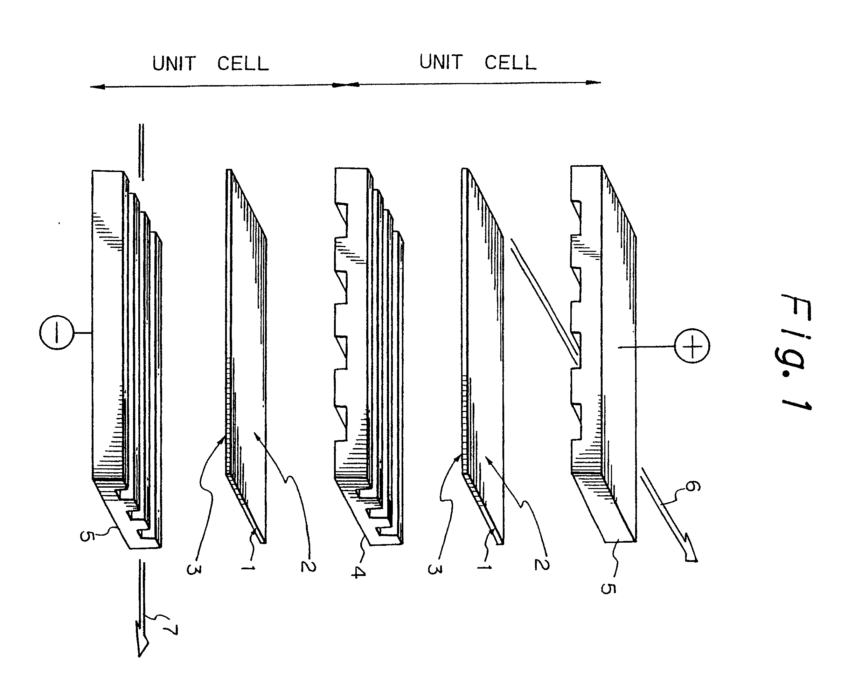

Figure 1 shows a structure of planar-type solid oxide fuel cells. In the figure, 1 denotes a sheet of a solid electrolyte, e.g., Ca-stabilized zirconia having a cathode, e.g., $La_{0.9}Sr_{0.1}MnO_3$, on the upper surface thereof and an anode, e.g., $NiO/ZrO_2$ cermet on the lower surface thereof; 4 denotes a separator made by a novel lanthanum chromite-based complex oxide of the present invention; and 5 is also made of a lanthanum chromite-based complex oxide but is used as an external output terminal. The separator 4, as seen in Fig.1, provides paths for air 6 and fuel (e.g., hydrogen) 7 formed by grooves in the separator 4, and electrically connects the anode 3 and the cathode 2 of the adjacent cells. The external output terminal 5 forms paths for air 6 and fuel 7 at both ends of the assembled unit cells, electrically connects the anode 3 or the cathode 2, and is made of a lanthanum chromite-based complex oxide of the present invention. Althouth two cells are assembled in Fig.1, three or more cells may be assembled, and in such cases, a separator 4 is inserted between the each of the adjacent cells.

It should be noted that the structure of an assembly of solid electrolyte type fuel cells is not limited to that of Fig.1.

Example 1

First, 11.057 grams of lanthanum oxide, 2.505 grams of strontium carbonate, 5.803 grams of chromic oxide, and 0.636 grams of cobaltous oxide were weighed and wet-kneaded in an agate mortar. The mixed powders had a composition corresponding to $La_{0.8}Sr_{0.2}Cr_{0.9}Co_{0.1}O_3$, and were calcined at 1200 °C for 1 hour at a temperature elevation rate of 20 °C/min.

The thus-obtained lanthanum chromite powders were analyzed by X-ray diffraction, and a secondary phase was not found, and thus it was confirmed that cobalt is solid-soluted in the lanthanun chromite lattice having a perovskite structure.

The powders were formed into pellets by a floating molding method under a pressure of $300kgf/cm^2$, and were fired at 1600 °C for 2 hours at a temperature elevation rate of 5 °C/min.

The density and electrical conductivity of the thus-obtained sintered body were measured, and it was found that the density was $6.5g/cm^3$(relative density more than 99%) and the electrical conductivity at 1000 °C was 49 S/cm.

The distribution of the elements in the sintered body was observed by a scanning electron microscope and an energy dispersive X-ray(EDX) spectroscopy, and it was confirmed that the added cobalt was uniformly distributed by substituting chromium without segregation, etc.

For comparison, a sintered body having a composition of $La_{0.8}Sr_{0.2}CrO_3$ was produced by a procedure similar to the above. The density of this sintered body was $5.0g/cm^3$(relative density 76 %) and the electrical conductivity at 1000 °C was 18 S/cm.

It is clear that both the density and the electrical conductivity of a lanthanum chromite were remarkably improved by adding cobalt.

Example 2-6

Sintered bodies having the compositions shown in the following table were produced by the same procedure as used in Example 1, except that the starting materials were wet-kneaded in a ball mill for 48 hours and the calcination was conducted at 1200 °C for 2 hours (temperature elevation rate 20 °C/min).

The measured densities and electrical conductivities of the obtained sintered bodies are also shown in the following table.

| Ex. | Coposition | Conductivity at 1000 °C | Density (rel.d.) |
|---|---|---|---|
| 2 | $La_{0.8}Sr_{0.2}Cr_{0.9}Co_{0.1}O_3$ | 44 S/cm | $6.5g/cm^3$ (more than 99%) |
| 3 | $La_{0.7}Sr_{0.3}Cr_{0.9}Co_{0.1}O_3$ | 49 S/cm | $6.3g/cm^3$ (97%) |
| 4 | $La_{0.6}Sr_{0.4}Cr_{0.9}Co_{0.1}O_3$ | 69 S/cm | $6.1g/cm^3$ (94%) |
| 5 | $La_{0.7}Sr_{0.3}Cr_{0.8}Co_{0.2}O_3$ | 68 S/cm | $6.3g/cm^3$ (97%) |
| 6 | $La_{0.7}Sr_{0.3}Cr_{0.7}Co_{0.3}O_3$ | 81 S/cm | $6.3g/cm^3$ (97%) |

In the table, the relative density ("rel.d.") was calculated by considering the theoretical density as 6.5 $g/cm^3$.

It is confirmed from the table that an increase of the substituting Sr improves the electrical conductivity but reduces the density, and the electrical conductivity is improved by an increase of the replacing Co.

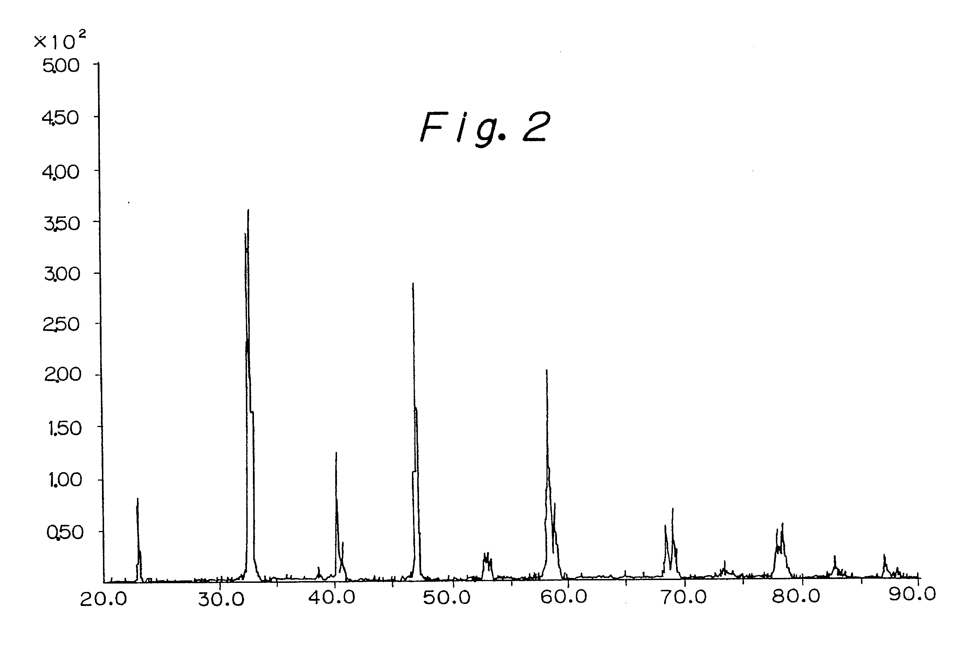

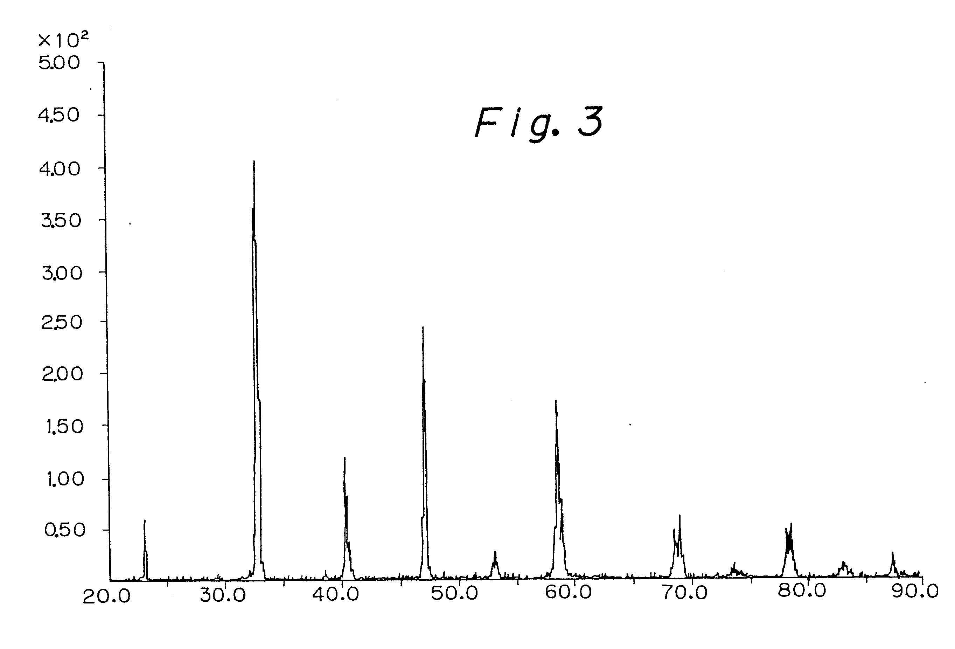

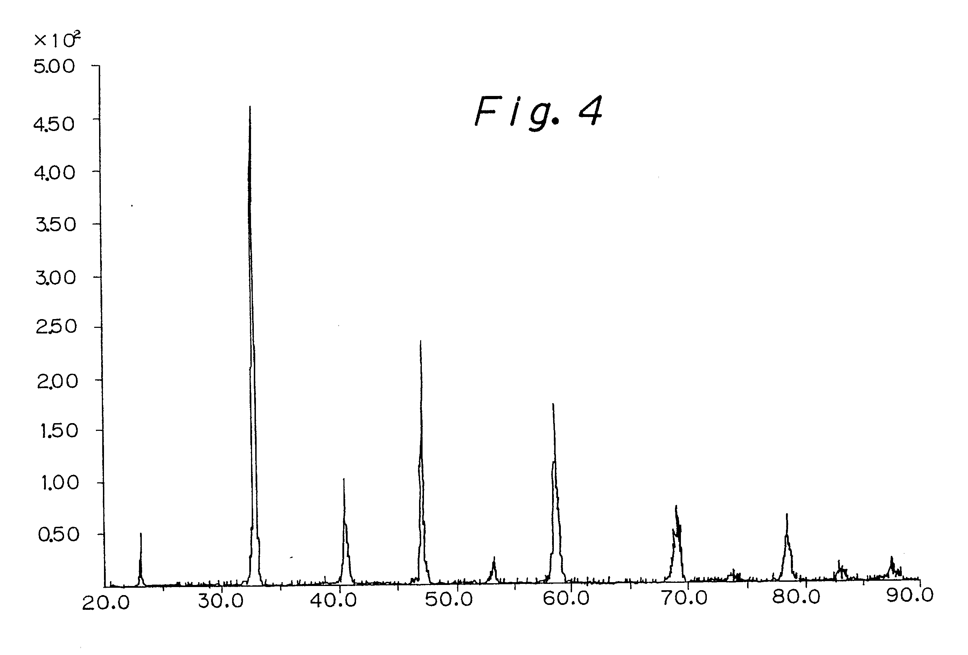

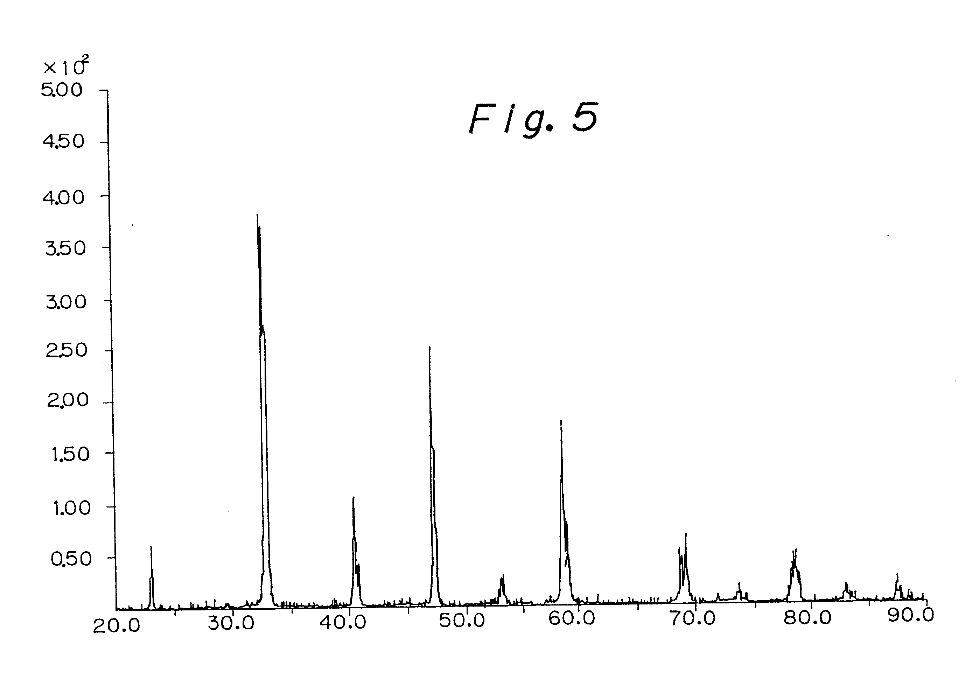

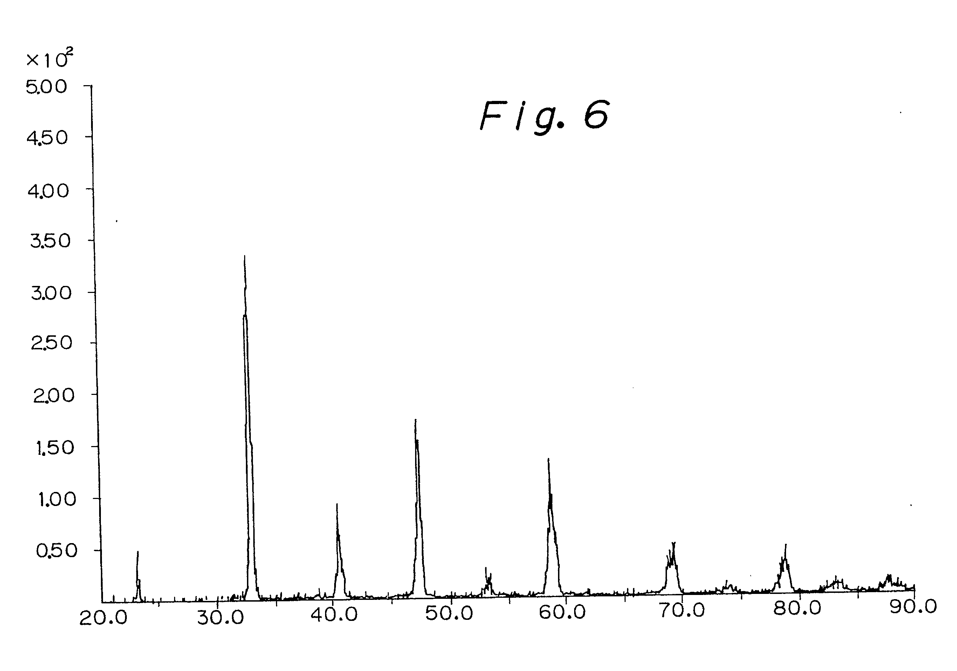

The an X-ray diffraction patterns of these sintered bodies (Examples 2-6) are shown in Figs.2-6.


Example 7

First, 26.065 grams of lanthanum oxide, 5.905 grams of strontium carbonate, 12.919 grams of chromic oxide, 1.654 grams of nickelic oxide, and 0.814 grams of zinc oxide were weighed and wet-kneaded in an agate mortar. The mixed powders had a composition corresponding to $La_{0.8}Sr_{0.2}Cr_{0.1}Ni_{0.1}Zn_{0.05}O_3$, and were calcined at 1200 °C for 1 hour at a temperature elevation rate of 20 °C/min. The thus-obtained lanthanum chromite powders were analyzed by X-ray diffraction and a secondary phase was not found. Accordingly, it was confirmed that nickel and zinc are solid soluted in the lanthanun chromite lattice having a perovskite structure.

The powders were formed by a floating molding under a pressure of $300kgf/cm^2$, and were fired at 1600 °C for 2 hours at a temperature elevation rate of 5 °C/min.

The density and electrical conductivity of the thus-obtained sintered body were measured, and it was found that the density was $6.1g/cm^3$ (relative density 94 %) and the electrical conductivity at 1000 °C was 36 S/cm.

The distribution of the elements in the sintered body was observed by a scanning electron microscope and an EDX spectroscopy, and it was confirmed that the added nickel and zinc were uniformly distributed by substituting chromium without segregation, etc.

It is clear that both the density and the electrical conductivity of a lanthanum chromite were remarkably improved by adding nickel and zinc.


Example 8

First, 26.065 grams of lanthanum oxide, 5.905 grams of strontium carbonate, 12.919 grams of chromic oxide, 0.803 grams of tricobalt tetraoxide, 0.827 grams of nickelic oxide, and 0.814 grams of zinc oxide were weighed and wet-kneaded in an agate mortar. The mixed powders had a composition corresponding to $La_{0.8}Sr_{0.2}Cr_{0.05}Co_{0.5}Ni_{0.5}Zn_{0.05}O_3$, and were calcined at 1200 °C for 1 hour at a temperature elevation rate of 20 °C/min. The thus-obtained lanthanum chromite powders were analyzed by X-ray diffraction and a secondary phase was not found. Accordingly, it was confirmed that cobalt, nickel and zinc are solid soluted in the lanthanun chromite lattice having a perovskite structure.

The powders were formed by a floating molding under a pressure of $300kgf/cm^2$, and were fired at 1600 °C for 2 hours at a temperature elevation rate of 5 °C/min.

The density and electrical conductivity of the thus obtained sintered body were measured, and it was found that the density was $6.3g/cm^3$ (relative density 97 %) and the electrical conductivity at 1000 °C was 40 S/cm.

The distribution of the elements in the sintered body was observed by a scanning electron microscope and an EDX spectroscopy, and it was confirmed that the added cobalt, nickel and zinc were uniformly distributed by substituting chromium without segregation, etc.

It is clear that both the density and the electrical conductivity of a lanthanum chromite were remarkably improved by adding cobalt, nickel and zinc.

Example 9

First, 26.065 grams of lanthanum oxide, 5.905 grams of strontium carbonate, 13.679 grams of chromic oxide, and 1.654 grams of nickelic oxide were weighed and wet-kneaded in an agate mortar. The mixed powders had a composition corresponding to $La_{0.8}Sr_{0.2}Cr_{0.9}Ni_{0.1}O_3$, and were calcined at 1200 °C for 1 hour at a temperature elevation rate of 20 °C/min. The thus-obtained lanthanum chromite powders were analyzed by an X-ray diffraction and a secondary phase was not found. Accordingly, it was confirmed that nickel is solid soluted in the lanthanun chromite lattice having a perovskite structure.

The powders were formed by a floating molding under a pressure of 300kgf/cm², and were fired at 1600 °C for 2 hours at a temperature elevation rate of 5 °C/min.

The density and electrical conductivity of the thus-obtained sintered body were measured, and it was found that the density was 6.2g/cm³(relative density 95 %) and the electrical conductivity at 1000 °C was 39 S/cm.

The distribution of the elements in the sintered body was observed by a scanning electron microscope and an EDX spectroscopy, and it was confirmed that the added nickel was uniformly distributed by substituting chromium without segregation, etc.

It is clear that both the density and the electrical conductivity of a lanthanum chromite were remarkably improved by adding nickel.

Example 10

First, 26.065 grams of lanthanum oxide, 5.905 grams of strontium carbonate, 13.679 grams of chromic oxide, and 1.597 grams of ferric oxide were weighed and wet-kneaded in an agate mortar. The mixed powders had a composition corresponding to $La_{0.8}Sr_{0.2}Cr_{0.9}Fe_{0.1}O_3$, and were calcined at 1200 °C for 1 hour at a temperature elevation rate of 20 °C/min. The thus-obtained lanthanum chromite powders were analyzed by X-ray diffraction and a secondary phase was not found. Accordingly, it was confirmed that iron is solid soluted in the lanthanun chromite lattice having a perovskite structure.

The powders were formed by a floating molding under a pressure of 300kgf/cm², and were fired at 1600 °C for 2 hours at a temperature elevation rate of 5 °C/min.

The density and electrical conductivity of the thus obtained sintered body were measured, and it was found that the density was 5.6g/cm³(relative density 86 %) and the electrical conductivity at 1000 °C was 21 S/cm.

The distribution of the elements in the sintered body was observed by a scanning electron microscope and an EDX spectroscopy and it was confirmed that the added iron was uniformly distributed by substituting chromium without segregation, etc.

It is clear that both the density and the electrical conductivity of a lanthanum chromite were improved by adding iron.

Example 11

First, 26.065 grams of lanthanum oxide, 5.905 grams of strontium carbonate, 12.919 grams of chromic oxide, 1.605 grams of tricobalt tetroxide, and 0.814 grams of zinc oxide were weighed and wet-kneaded in an agate mortar. The mixed powders had a composition corresponding to $La_{0.8}Sr_{0.2}Cr_{0.85}Co_{0.1}Zn_{0.05}O_3$, and were calcined at 1200 °C for 1 hour at a temperature elevation rate of 20 °C/min. The thus-obtained lanthanum chromite powders were analyzed by an X-ray diffraction and a secondary phase was not found. Accordingly, it was confirmed that cobalt and zinc are solid soluted in the lanthanun chromite lattice having a perovskite structure.

The powders were formed by a floating molding under a pressure of 300kgf/cm², and were fired at 1600 °C for 2 hours at a temperature elevation rate of 5 °C/min.

The density and electrical conductivity of the thus obtained sintered body were measured, and it was found that the density was 6.4g/cm³(relative density 98 % ) and the electrical conductivity at 1000 °C was 45 S/cm.

The distribution of the elements in the sintered body was observed by a scanning electron microscope and an EDX spectroscopy, and it was confirmed that the added cobalt and zinc were uniformly distributed by substituting chromium without segregation, etc.

It is clear that both the density and the electrical conductivity of a lanthanum chromite were remarkably

## EP 0 411 547 A1

improved by adding cobalt and zinc.

**Claims**

1. A lanthanum chromite-based complex oxide represented by the general formula $La_{1-x}M_xCr_{1-y}M'_yO_3$ where M stands for at least one alkaline earth metal other than magnesium, $M'$ stands for at least one metal selected from the group consisting of Co, Fe, Ni, Zn, Cu, Mn, Al, V, Ir, Mo, W, Pd and Y, $0 < x \leq 0.5$, and $0 < y \leq 0.5$; said complex oxide having a perovskite structure.

2. A lanthanum chromite-based complex oxide according to claim 1, wherein said metal $M'$ is selected from the group consisting of Co, Fe, Ni and Zn.

3. A lanthanum chromite-based complex oxide according to claim 1, wherein said metal $M'$ is selected from the group consisting of Co and Ni.

4. A lanthanum chromite-based complex oxide according to claim 1, wherein $0.2 \leq x \leq 0.4$.

5. A lanthanum chromite-based complex oxide according to claim 1, wherein $0.05 \leq y \leq 0.3$.

6. A high temperature electrically conductive material essentially consisting of a lanthanum chromite-based complex oxide according to claim 1.

7. A planar type assembly of solid oxide fuel cells, comprising
solid electrolytes,
cathodes disposed on one surface of said solid electrolytes,
anodes disposed on the other surface of said solid electrolytes,
said solid electrolytes being stacked such that the cathodes and anodes are arranged alternately, and
separators inserted between adjacent solid electrolytes and in contact with the cathode and anode of the adjacent solid electrolytes, said separator thereby electrically connecting said cathode and anode, said separator having first and second grooves forming a first path for an oxygen-containing gas on a side of said cathode and a second path for a fuel on a side of said anode, said first and second paths being separated by said separator,
wherein said separator essentially consists of a lanthanum chromite-based complex oxide represented by the general formula $La_{1-x}M_xCr_{1-y}M'_yO_3$ where M stands for at least one alkaline earth metal other than magnesium, $M'$ stands for at least one metal selected from the group consisting of Co, Fe, Ni, Zn, Cu, Mn, Al, V, Ir, Mo, W, Pd and Y, $0 < x \leq 0.5$, and $0 < y \leq 0.5$; said complex oxide having a perovskite structure.

# *Fig. 1*

Fig. 2

EP 0 411 547 A1

Fig. 3

EP 0 411 547 A1

Fig. 4

EP 0 411 547 A1

Fig. 5

Fig. 6

EP 0 411 547 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE - A1 - 2 610 699 (ARITA) * Claims; pages 1,4, lines 6-9 * | 1-7 | C 04 B 35/50 C 04 B 35/42 C 04 B 35/34 H 01 M 8/10 |
| P,X | DERWENT ACCESSION NO. 90-242 067, Questel Tele-system (WPIL) DERWENT PUBLICATIONS LTD., London * Abstract * & JP-A2-02-167 461 (MAT-SUSHITA ELEC. IND. K.K.) | 1-5,7 | |

TECHNICAL FIELDS SEARCHED (Int. Cl.5)

C 04 B
H 01 B
H 01 M

The present search report has been drawn up for all claims

| Place of search | Date of completion of the search | Examiner |
|---|---|---|
| VIENNA | 07-11-1990 | BECK |